# EUROPÄISCHE PATENTANMELDUNG

(11) **EP 2 955 601 A1**
(43) Veröffentlichungstag der Anmeldung: **16.12.2015**
(21) Anmeldenummer: 14172413.8
(22) Anmeldetag: 13.06.2014
(51) Int. Cl.: G05D 23/24, H02K 9/02, H02K 9/04, H02K 9/06

(54) **Kühlung einer rotierenden elektrischen Maschine**

(71) Anmelder: Siemens Aktiengesellschaft, 80333 München (DE)
(72) Erfinder: Hiller, Martin, 99097 Erfurt (DE); Michelsson, Olaf, 99310 Arnstadt (DE); Negulyaev, Nikolay, 99096 Erfurt (DE); Walbeck, Thomas Robert, 99198 Erfurt (DE)

(57) **Zusammenfassung**

Die Erfindung betrifft ein System zum Kühlen einer rotierenden elektrischen Maschine unter Verwendung eines in einem Teilbereich der rotierenden elektrischen Maschine strömenden Kühlgases aufweisend eine an dem Rotor angeordnete, mit dem Rotor mit rotierende Lüftereinrichtung, mit der ein Kühlgasstrom erzeugbar ist, eine Sensoreinrichtung zum kontinuierlichen oder zeitlich beabstandeten Erfassen von einem Zustandsparameter von einem Teil der rotierenden elektrischen Maschine, eine zusätzliche Lüftereinrichtung, mit der ein zusätzlicher Kühlgasstrom erzeugbar ist, und eine Regel- und/oder Steuereinrichtung, die kommunikationstechnisch mit der Sensoreinrichtung und der zusätzlichen Lüftereinrichtung verbunden ist, wobei die Regel- und/oder Steuereinrichtung die zusätzliche Lüftereinrichtung einschaltet, wenn der von der Sensoreinrichtung jeweilig erfasste Zustandsparameter über einem vorgegebenen Grenzwert liegt oder gleich diesem Grenzwert ist, die zusätzliche Lüftereinrichtung ausschaltet, wenn der von der Sensoreinrichtung jeweilig erfasste Zustandsparameter unter dem vorgegebenen Grenzwert liegt, und die zusätzliche Lüftereinrichtung derart ansteuert, dass die Stärke des von der zusätzlichen Lüftereinrichtung erzeugten zusätzlichen Kühlgasstroms mit anwachsender Differenz zwischen dem jeweilig erfassten Zustandsparameter und dem Grenzwert anwächst und mit abfallender Differenz zwischen dem jeweilig erfassten Zustandsparameter und dem Grenzwert abfällt.

## Beschreibung

Die Erfindung betrifft ein System zum Kühlen einer rotierenden elektrischen Maschine, insbesondere eines Turbogenerators, unter Verwendung eines in zumindest einem Teilbereich der rotierenden elektrischen Maschine strömenden Kühlgases, insbesondere einer Luft.

Des Weiteren betrifft die Erfindung ein Verfahren zum Kühlen einer rotierenden elektrischen Maschine, insbesondere eines Turbogenerators, unter Verwendung eines in zumindest einem Teilbereich der rotierenden elektrischen Maschine strömenden Kühlgasstroms.

Rotierende elektrische Maschinen in Form von Turbogeneratoren werden in Kraftwerken zum Erzeugen von elektrischer Energie eingesetzt. Hierzu ist ein Turbogenerator mechanisch mit wenigstens einer Gasturbine und/oder Dampfturbine gekoppelt, wobei der Turbogenerator zusammen mit der Gasturbine bzw. Dampfturbine einen Turbosatz bildet. Eine Gasturbine umfasst üblicherweise eine Turbine, einen Verdichter und eine Brennkammer, wobei der Verdichter über die Turbine antreibbar ist.

Während des Betriebs einer rotierenden elektrischen Maschine wird zwangsläufig Wärme in dem Stator und/oder dem Rotor der rotierenden elektrischen Maschine erzeugt. Diese Verlustwärme entsteht durch Umwandlung von mechanischer Energie in elektrische Energie mittels der rotierenden elektrischen Maschine.

Die in einem Stator und/oder einem Rotor einer rotierenden elektrischen Maschine erzeugte Wärme muss zu einem sicheren Betrieb der rotierenden elektrischen Maschine aus der rotierenden elektrischen Maschine abgeführt werden. Dies ist insbesondere deshalb erforderlich, da an dem Stator und/oder dem Rotor elektrische Isolierungen vorhanden sind, welche ab Erreichen einer bestimmten Temperatur beeinträchtigt werden würden, was zu einer schnelleren Alterung führen könnte. Je mehr Wärme aus einer rotierenden elektrischen Maschine abgeführt wird, desto höher kann die rotierende elektrische Maschine ausgelastet werden, was mit einer entsprechenden Leistungssteigerung einhergeht.

Herkömmlich kann zur Wärmeabführung aus einer luftgekühlten rotierenden elektrischen Maschine bzw. zur Kühlung des Stators und/oder des Rotors der rotierenden elektrischen Maschine Luft verwendet, welche beispielsweise an beiden axialen Enden der rotierenden elektrischen Maschine in diese eingeleitet und über Kühlkanäle in dem Rotor und dem Stator radial, beispielsweise in einem mittleren Bereich der rotierenden elektrischen Maschine, aus der rotierenden elektrischen Maschine abgeführt wird. Alternativ kann Luft radial in eine rotierende elektrische Maschine eingeleitet und über Kühlkanäle in dem Rotor und dem Stator an beiden axialen Enden der rotierenden elektrischen Maschine aus der rotierenden elektrischen Maschine abgeführt werden. Nach einer weiteren Alternative kann Luft an einem axialen Ende der rotierenden elektrischen Maschine in diese eingeführt und an dem anderen axialen Ende wieder aus der rotierenden elektrischen Maschine abgeführt werden. Die Wärmeabführung kann alternativ unter Verwendung von Wasserstoff oder einer Kombination aus Wasserstoff und Reinwasser erfolgen.

Aufgrund eines starken Zuwachses an regenerativen Energieerzeugern in gegebenen Versorgungsnetzen und einem gleichzeitig erfolgenden Rückbau von Großkraftwerken werden zunehmend rotierende elektrische Maschinen in Form von Synchronmaschinen im Phasenschieberbetrieb (auch Phasenschieber genannt) eingesetzt, die in der Lage sind, sowohl Blindleistung als auch Kurzschlussleistung sowie ein großes Massenträgheitsmoment im Netz zur Verfügung zu stellen.

Eine Auslegung einer Synchronmaschine im Phasenschieberbetrieb geschieht nach dem geforderten Blindleistungsbedarf bei maximal auftretenden Umgebungstemperaturen am Einsatzstandort. Da der Blindleistungsbedarf im Netz stark fluktuiert und nur sehr selten ein maximal ausgelegter Nennlastpunkt des Phasenschiebers erreicht wird, ist die aus einem Netz bezogene Wirkleistung zur Deckung von Maschinenverlusten verhältnismäßig hoch. Insbesondere die mit dem Betrieb eines Phasenschiebers verbundenen Leerlaufverluste tragen zu dieser recht schlechten Verlustbilanz bei. Bislang müssen bei den Synchronmaschinen im Phasenschieberbetrieb diese hohen Verluste höherer Last-Betriebspunkte fast unvermindert im Niedriglastbereich hingenommen werden.

Aufgabe der Erfindung ist es, die mit einem Betrieb einer rotierenden elektrischen Maschine verbundenen Verluste zu reduzieren.

Das erfindungsgemäße System zum Kühlen einer rotierenden elektrischen Maschine, insbesondere eines Turbogenerators, unter Verwendung eines in zumindest einem Teilbereich der rotierenden elektrischen Maschine strömenden Kühlgases, insbesondere einer Luft, umfasst
- wenigstens eine an dem Rotor angeordnete, mit dem Rotor mit rotierende Lüftereinrichtung, die derart ausgelegt ist, dass mit ihr ein Kühlgasstrom erzeugbar ist, mit dem eine ausreichende Kühlung der rotierenden elektrischen Maschine ausschließlich bis zum Erreichen einer vorgegebenen Grenztemperatur von wenigstens einem Teil der rotierenden elektrischen Maschine erfolgen kann,
- wenigstens eine Sensoreinrichtung zum kontinuierlichen oder zeitlich beabstandeten Erfassen von zumindest einem Zustandsparameter von mindestens einem Teil der rotierenden elektrischen Maschine,
- wenigstens eine zusätzliche Lüftereinrichtung, mit der ein zusätzlicher Kühlgasstrom erzeugbar ist, und
- wenigstens eine Regel- und/oder Steuereinrichtung, die kommunikationstechnisch mit der Sensoreinrichtung und der zusätzlichen Lüftereinrichtung verbunden ist, wobei die Regel- und/oder Steuereinrichtung eingerichtet ist, die zusätzliche Lüftereinrichtung einzuschalten, wenn der von der Sensoreinrichtung jeweilig erfasste Zustandsparameter über einem vorgegebenen Grenzwert liegt oder gleich diesem Grenzwert ist, die zusätzliche Lüftereinrichtung auszuschalten, wenn der von der Sensoreinrichtung jeweilig erfasste Zustandsparameter unter dem vorgegebenen Grenzwert liegt, und die zusätzliche Lüftereinrichtung derart anzusteuern, dass die Stärke des von der zusätzlichen Lüftereinrichtung erzeugten zusätzlichen Kühlgasstroms mit anwachsender Differenz zwischen dem jeweilig erfassten Zustandsparameter und dem Grenzwert anwächst und mit abfallender Differenz zwischen dem jeweilig erfassten Zustandsparameter und dem Grenzwert abfällt.

Der Erfindung liegt die Erkenntnis zu Grunde, dass durch an einem Rotor einer rotierenden elektrischen Maschine angeordnete, mit rotierende Lüftereinrichtungen, beispielsweise Lüfterschaufelreihen oder Rotorlüftungsschlitze, erzeugte Lüfterreibungsverluste bzw. Luftreibungsverluste den Hauptanteil an den mit einer rotierenden elektrischen Maschine, insbesondere in Form einer Synchronmaschine, verbundenen Leerlaufverlusten stellen. Gemäß der Erfindung kann beispielsweise die Größe und/oder die Anzahl an zur Ausbildung einer Lüftereinrichtung in Form einer Lüfterschaufelreihe verwendeten Lüfterschaufeln deutlich gegenüber herkömmlichen Lüfterschaufelreihen reduziert werden, da eine Lüfterschaufelreihe gemäß der Erfindung nicht dahingehend ausgelegt werden muss, dass mit ihr ein Kühlluftstrom erzeugbar ist, mit dem eine ausreichende Kühlung der rotierenden elektrischen Maschine auch bei deren Maximalauslastung gewährleistet ist. Stattdessen kann eine Lüfterschaufelreihe bei dem erfindungsgemäßen System beispielsweise derart ausgelegt sein, dass mit ihr eine ausreichende Kühlung der rotierenden elektrischen Maschine nur im Leerlauf erfolgt, wozu deutlich kleinere bzw. weniger Lüfterschaufeln in einer Lüfterschaufelreihe erforderlich sind. Hiermit sind deutlich geringere Lüfterreibungsverluste bzw. Leerlaufverluste verbunden. Bei über den Leerlauf hinausgehenden Auslastungen der rotierenden elektrischen Maschine kann gemäß der Erfindung die zusätzliche Lüftereinrichtung eingeschaltet und mittels der Regel- und/oder Steuereinrichtung erfindungsgemäß angesteuert werden, um eine bedarfsgerechte Kühlung korrelierend mit der jeweilig abgeforderten Leistung der rotierenden elektrischen Maschine bzw. eine bedarfsgerechte Steuerung bzw. Regelung der zur Kühlung verwendeten Luftmenge in der rotierenden elektrischen Maschine zu ermöglichen. Die obigen Ausführungen zu den Lüfterschaufelreihen gelten entsprechend für eine Rotorlüftungsschlitze aufweisende mitrotierende Lüftereinrichtung. Mit den gemäß der Erfindung reduzierten Verlusten einer rotierenden elektrischen Maschine sind erhebliche Kosteneineinsparungen verbunden, wodurch eine rotierende elektrische Maschine ökonomisch optimiert eingesetzt werden kann.

Gemäß der Erfindung wird eine Kühlung einer rotierenden elektrischen Maschine aufgeteilt in einen mit der zusätzlichen Lüftereinrichtung erzeugbaren Anteil und einen mit der mitrotierenden Lüftereinrichtung erzeugbaren im Wesentlichen konstanten Anteil. Die zusätzliche Lüftereinrichtung ist elektrisch oder mechanisch zu- bzw. abschaltbar bzw. steuer- und/oder regelbar. Mit dem erfindungsgemäßen System können eine stets bedarfsgerechte Kühlung einer rotierenden elektrischen Maschine und daher optimierte Verluste im Arbeitspunkt der rotierenden elektrischen Maschine gewährleistet werden. Die Veränderung (Anwachsen, Abfallen) des zusätzlichen Kühlgasstroms kann auch in Stufen, insbesondere mit wenigstens einer Stufe, erfolgen und muss nicht kontinuierlich ausgeführt werden.

Durch die erfindungsgemäße Reduzierung der Luftreibungsverluste einer rotierenden elektrischen Maschine in einem definierten Betriebszustand, der in der Regel der Leerlaufzustand der rotierenden elektrischen Maschine ist, kann zudem die Anfahrleistung von einem Motor- bzw. Anfahrumrichter (Ponymotor) der rotierenden elektrischen Maschine gesenkt und somit die Kosten und das Bauvolumen der rotierenden elektrischen Maschine verringert werden. Insbesondere kann ein schnelleres Anfahren einer rotierenden elektrischen Maschine ermöglicht werden.

Der im Bedarfsfall zusätzlich in die rotierende elektrische Maschine ein- bzw. aus dieser ausgeleitete, von der zusätzlichen Lüftereinrichtung jeweilig erzeugte zusätzliche Kühlgasstrom kann zumindest teilweise den von der mit rotierenden Lüftereinrichtung erzeugten Kühlgasstrom überlagern.

Das erfindungsgemäße System kann auch zwei oder mehrere an dem Rotor angeordnete, mit dem Rotor mit rotierende Lüftereinrichtungen aufweisen, mit denen gemeinsam ein Kühlgasstrom erzeugbar ist, mit dem eine ausreichende Kühlung der rotierenden elektrischen Maschine ausschließlich bis zum Erreichen einer vorgegebenen Grenztemperatur von wenigstens einem Teil der rotierenden elektrischen Maschine erfolgen kann. Beispielsweise können eine im Druckbetrieb arbeitende Lüftereinrichtung an einem axialen Endbereich des Rotors und eine im Saugbetrieb arbeitende weitere Lüftereinrichtung an dem jeweils anderen axialen Endbereich des Rotors angeordnet sein. In einer Variante können beide axialen Lüftereinrichtungen im Druckbetrieb oder im Saugbetrieb betrieben werden, wobei das Kühlgas nach der Kühlung der rotierenden elektrischen Maschine radial aus der rotierenden elektrischen Maschine abgeführt bzw. vor der Kühlung der rotierenden elektrischen Maschine in diese eingeführt werden kann.

Das erfindungsgemäße System kann auch zwei oder mehrere Sensoreinrichtungen zum kontinuierlichen oder zeitlich beabstandeten Erfassen von zumindest einem Zustandsparameter von jeweils mindestens einem Teil der rotierenden elektrischen Maschine aufweisen. Die einzelnen Sensoreinrichtungen können hierzu an verschiedenen Teilen der rotierenden elektrischen Maschine angeordnet sein. Als Zustandsparameter kann beispielsweise die Temperatur von mindestens einem Teil der rotierenden elektrischen Maschine, die Ist-Ausgangsleistung der rotierenden elektrischen Maschine oder ein anderweitiger allgemeiner Betriebszustand der rotierenden elektrischen Maschine erfasst werden.

Das erfindungsgemäße System kann auch zwei oder mehrere zusätzliche Lüftereinrichtungen aufweisen, mit denen jeweils ein zusätzlicher Kühlgasstrom erzeugbar ist, um Kühlgasströme von verschiedenen Richtungen in die rotierende elektrische Maschine einleiten bzw. aus dieser ausleiten zu können. Die zusätzliche Lüftereinrichtung kann unabhängig von dem Rotor angetrieben sowie zumindest teilweise innerhalb oder außerhalb eines Gehäuses der rotierenden elektrischen Maschine angeordnet sein. Die zusätzliche Lüftereinrichtung kann alternativ als im Bedarfsfall mechanisch an den Rotor koppelbare Lüftungseinrichtung ausgebildet sein.

Die Regel- und/oder Steuereinrichtung des erfindungsgemäßen Systems kann wenigstens einen Mikrocontroller und zumindest eine Speichereinheit aufweisen. Die Regel- und/oder Steuereinrichtung kann kabellos oder kabelgebunden kommunikationstechnisch mit der Sensoreinrichtung und der zusätzlichen Lüftereinrichtung verbunden sein, um von der Sensoreinrichtung Sensorsignale erfassen bzw. Steuersignale an die zusätzliche Lüftereinrichtung senden zu können. Alternativ kann mittels der Regel- und/oder Steuereinrichtung eine hydraulische oder mechanische Regelung bzw. Steuerung ohne jegliche Elektronik realisiert sein.

Der von der Regel- und/oder Steuereinrichtung berücksichtigte vorgegebene Grenzwert des Zustandsparameters kann durch Messungen ermittelt oder aus empirischen Daten abgeleitet werden.

Alternativ oder zusätzlich ist auch eine Regelung bzw. Steuerung mittels der Regel- und/oder Steuereinrichtung möglich, bei der in Abhängigkeit eines angefahrenen Betriebszustands der rotierenden elektrischen Maschine ein von der zusätzlichen Lüftereinrichtung erzeugter zusätzlicher Kühlgasstrom zugeschaltet wird.

Bevorzugt ist die Sensoreinrichtung eingerichtet, als Zustandsparameter eine Temperatur von wenigstens einem Teil der rotierenden elektrischen Maschine zu erfassen, wobei die Regel- und/oder Steuereinrichtung eingerichtet ist, als Grenzwert einen Temperaturgrenzwert zu verwenden. Hiernach erfolgt eine temperaturabhängige Regelung der Kühlung der rotierenden elektrischen Maschine. Die Temperatur kann beispielsweise an einem Teil der rotierenden elektrischen Maschine erfasst werden, welcher im Betrieb der rotierenden elektrischen Maschine mit der größten Wärmemenge beaufschlagt ist (auch Hot-Spot genannt).

Die Regel- und/oder Steuereinrichtung ist bevorzugt eingerichtet, als Temperaturgrenzwert die vorgegebene Grenztemperatur zu verwenden. Hierdurch kann die zusätzliche Lüftereinrichtung genau dann eingeschaltet werden, wenn eine ausreichende Kühlung der rotierenden elektrischen Maschine mittels der mitrotierenden Lüftereinrichtung bzw. des damit erzeugten konstanten Kühlungsanteils nicht mehr zuverlässig gewährleistet werden kann. Alternativ kann der Temperaturgrenzwert kleiner als die vorgegebene Grenztemperatur sein.

Nach dem erfindungsgemäßen Verfahren zum Kühlen einer rotierenden elektrischen Maschine, insbesondere eines Turbogenerators, unter Verwendung eines in zumindest einem Teilbereich der rotierenden elektrischen Maschine strömenden Kühlgasstroms
- wird wenigstens ein Zustandsparameter von zumindest einem Teil der rotierenden elektrischen Maschine kontinuierlich oder zeitlich beabstandet erfasst,
- erfolgt die Kühlung ausschließlich mittels einer an dem Rotor angeordneten, mit dem Rotor mit rotierenden Lüftereinrichtung, wenn der jeweilig erfasste Zustandsparameter unter einem vorgegebenen Grenzwert des Zustandsparameters liegt oder gleich diesem Grenzwert ist, und
- erfolgt die Kühlung bei über dem vorgegebenen Grenzwert liegendem jeweilig erfasstem Zustandsparameter mittels der mit rotierenden Lüftereinrichtung und einer zusätzlichen Lüftereinrichtung derart, dass das Ausmaß der Kühlung mit anwachsender Differenz zwischen dem jeweilig erfassten Zustandsparameter und dem Grenzwert anwächst und mit abfallender Differenz zwischen dem jeweilig erfassten Zustandsparameter und dem Grenzwert abfällt.

Mit diesem Verfahren sind die oben mit Bezug auf das System genannten Vorteile entsprechend verbunden.

Bevorzugt wird als Zustandsparameter eine Temperatur von wenigstens einem Teil der rotierenden elektrischen Maschine erfasst, wobei als Grenzwert ein Temperaturgrenzwert verwendet wird. Mit dieser Ausgestaltung sind die oben mit Bezug auf die entsprechende Ausgestaltung des Systems genannten Vorteile und Ausführungsvarianten entsprechend verbunden.

Im Folgenden wird eine bevorzugte Ausführungsform des erfindungsgemäßen Systems anhand der beigefügten schematischen Zeichnungen erläutert. Es zeigen:
- Fig. 1: eine perspektivische Darstellung eines herkömmlichen Rotors einer rotierenden Vollpolmaschine; und
- Fig. 2: eine schematische Darstellung eines Ausführungsbeispiels für ein erfindungsgemäßes System.

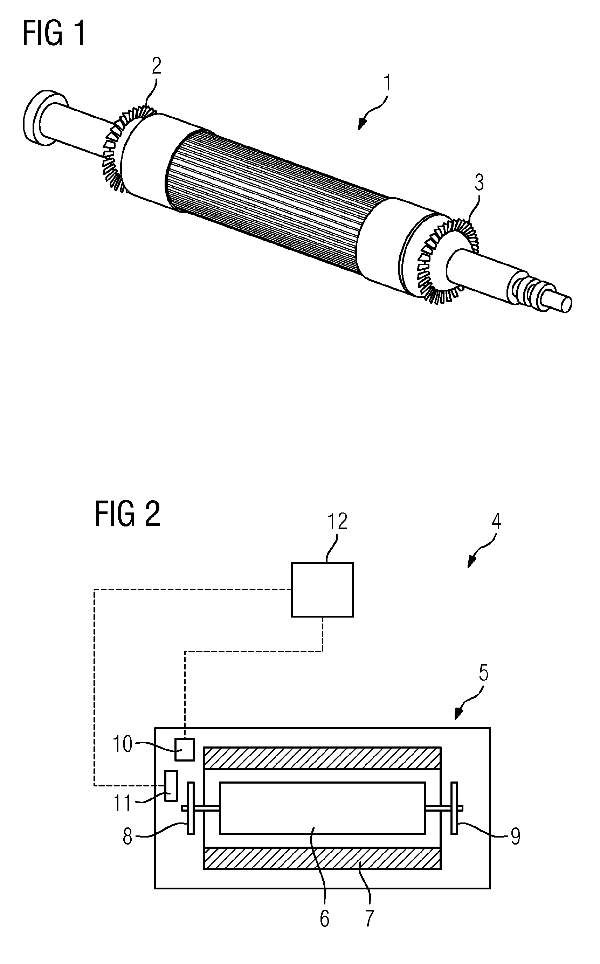

Figur 1 zeigt eine perspektivische Darstellung eines herkömmlichen Rotors 1 einer nicht näher dargestellten rotierenden Vollpolmaschine. Der Rotor 1 umfasst zwei an dem Rotor 1 angeordnete, mit dem Rotor 1 mitrotierende Lüfterschaufelreihen 2 und 3, die derart ausgelegt ist, dass mit ihnen ein Kühlgasstrom erzeugbar ist, mit dem eine ausreichende Kühlung der rotierenden elektrischen Maschine bei einer Vollauslastung und damit einhergehenden Betriebstemperaturen erfolgen kann. Die Lüfterschaufelreihen 2 und 3 sind an axialen Endbereichen des Rotors 1 angeordnet.

Figur 2 zeigt eine schematische Darstellung eines Ausführungsbeispiels für ein erfindungsgemäßes System 4 zum Kühlen einer rotierenden elektrischen Maschine 5 unter Verwendung eines in zumindest einem Teilbereich der rotierenden elektrischen Maschine 5 strömenden Kühlgases.

Das System 4 umfasst zwei an dem Rotor 6 angeordnete, mit dem Rotor 6 mit rotierende Lüftereinrichtungen 8 und 9 in Form von Lüfterschaufelreihen, die derart ausgelegt sind, dass mit ihnen ein Kühlgasstrom erzeugbar ist, mit dem eine ausreichende Kühlung der rotierenden elektrischen Maschine 5 ausschließlich bis zum Erreichen einer vorgegebenen Grenztemperatur von wenigstens einem Teil der rotierenden elektrischen Maschine 5 erfolgen kann.

Des Weiteren umfasst das System 4 eine Sensoreinrichtung 10 zum kontinuierlichen oder zeitlich beabstandeten Erfassen von einem Zustandsparameter von mindestens einem Teil der rotierenden elektrischen Maschine 5. Die Sensoreinrichtung 10 ist hierbei eingerichtet, als Zustandsparameter eine Temperatur von wenigstens einem Teil der rotierenden elektrischen Maschine 5 zu erfassen. Alternativ kann auch der Betriebszustand der elektrischen Maschine für eine Regelung oder Steuerung herangezogen werden.

Zudem umfasst das System 4 eine zusätzliche Lüftereinrichtung 11, mit der ein zusätzlicher Kühlgasstrom erzeugbar ist.

Ferner umfasst das System 4 eine Regel- und/oder Steuereinrichtung 12, die kommunikationstechnisch mit der Sensoreinrichtung 10 und der zusätzlichen Lüftereinrichtung 11 verbunden ist. Die Regel- und/oder Steuereinrichtung 12 ist eingerichtet, die zusätzliche Lüftereinrichtung 11 einzuschalten, wenn der von der Sensoreinrichtung 10 jeweilig erfasste Zustandsparameter über einem vorgegebenen Grenzwert liegt oder gleich diesem Grenzwert ist. Des Weiteren ist die Regel- und/oder Steuereinrichtung 12 eingerichtet, die zusätzliche Lüftereinrichtung 11 auszuschalten, wenn der von der Sensoreinrichtung 10 jeweilig erfasste Zustandsparameter unter dem vorgegebenen Grenzwert liegt. Auch ist die Regel- und/oder Steuereinrichtung 12 eingerichtet, die zusätzliche Lüftereinrichtung 11 derart anzusteuern, dass die Stärke des von der zusätzlichen Lüftereinrichtung 11 erzeugten zusätzlichen Kühlgasstroms mit anwachsender Differenz zwischen dem jeweilig erfassten Zustandsparameter und dem Grenzwert anwächst und mit abfallender Differenz zwischen dem jeweilig erfassten Zustandsparameter und dem Grenzwert abfällt. Die Veränderung (Anwachsen, Abfallen) des zusätzlichen Kühlgasstroms kann auch in Stufen, insbesondere mit wenigstens einer Stufe, erfolgen und muss nicht kontinuierlich ausgeführt werden. Die Regel- und/oder Steuereinrichtung 12 ist zudem eingerichtet, als Grenzwert einen Temperaturgrenzwert zu verwenden. Ferner ist die Regel- und/oder Steuereinrichtung 12 eingerichtet, als Temperaturgrenzwert die vorgegebene Grenztemperatur zu verwenden.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

## Patentansprüche

1. System (4) zum Kühlen einer rotierenden elektrischen Maschine (5), insbesondere eines Turbogenerators, unter Verwendung eines in zumindest einem Teilbereich der rotierenden elektrischen Maschine (5) strömenden Kühlgases, insbesondere einer Kühlluft, aufweisend
- wenigstens eine an dem Rotor (6) angeordnete, mit dem Rotor (6) mit rotierende Lüftereinrichtung (8, 9), die derart ausgelegt ist, dass mit ihr ein Kühlgasstrom erzeugbar ist, mit dem eine ausreichende Kühlung der rotierenden elektrischen Maschine (5) ausschließlich bis zum Erreichen einer vorgegebenen Grenztemperatur von wenigstens einem Teil der rotierenden elektrischen Maschine (5) erfolgen kann,
- wenigstens eine Sensoreinrichtung (10) zum kontinuierlichen oder zeitlich beabstandeten Erfassen von zumindest einem Zustandsparameter von mindestens einem Teil der rotierenden elektrischen Maschine (5),
- wenigstens eine zusätzliche Lüftereinrichtung (11), mit der ein zusätzlicher Kühlgasstrom erzeugbar ist, und
- wenigstens eine Regel- und/oder Steuereinrichtung (12), die kommunikationstechnisch mit der Sensoreinrichtung (10) und der zusätzlichen Lüftereinrichtung (11) verbunden ist, wobei die Regel- und/oder Steuereinrichtung (12) eingerichtet ist, die zusätzliche Lüftereinrichtung (11) einzuschalten, wenn der von der Sensoreinrichtung (10) jeweilig erfasste Zustandsparameter über einem vorgegebenen Grenzwert liegt oder gleich diesem Grenzwert ist, die zusätzliche Lüftereinrichtung (11) auszuschalten, wenn der von der Sensoreinrichtung (10) jeweilig erfasste Zustandsparameter unter dem vorgegebenen Grenzwert liegt, und die zusätzliche Lüftereinrichtung (11) derart anzusteuern, dass die Stärke des von der zusätzlichen Lüftereinrichtung (11) erzeugten zusätzlichen Kühlgasstroms mit anwachsender Differenz zwischen dem jeweilig erfassten Zustandsparameter und dem Grenzwert anwächst und mit abfallender Differenz zwischen dem jeweilig erfassten Zustandsparameter und dem Grenzwert abfällt.

2. System (4) gemäß Anspruch 1,
wobei die Sensoreinrichtung (10) eingerichtet ist, als Zustandsparameter eine Temperatur von wenigstens einem Teil der rotierenden elektrischen Maschine (5) zu erfassen, und wobei die Regel- und/oder Steuereinrichtung (12) eingerichtet ist, als Grenzwert einen Temperaturgrenzwert zu verwenden.

3. System (4) gemäß Anspruch 2,
wobei die Regel- und/oder Steuereinrichtung (12) eingerichtet ist, als Temperaturgrenzwert die vorgegebene Grenztemperatur zu verwenden.

4. Verfahren zum Kühlen einer rotierenden elektrischen Maschine (5), insbesondere eines Turbogenerators, unter Verwendung eines in zumindest einem Teilbereich der rotierenden elektrischen Maschine (5) strömenden Kühlgasstroms, wobei
- wenigstens ein Zustandsparameter von zumindest einem Teil der rotierenden elektrischen Maschine (5) kontinuierlich oder zeitlich beabstandet erfasst wird,
- die Kühlung ausschließlich mittels einer an dem Rotor (6) angeordneten, mit dem Rotor (6) mit rotierenden Lüftereinrichtung (8, 9) erfolgt, wenn der jeweilig erfasste Zustandsparameter unter einem vorgegebenen Grenzwert des Zustandsparameters liegt oder gleich diesem Grenzwert ist, und
- die Kühlung bei über dem vorgegebenen Grenzwert liegendem jeweilig erfasstem Zustandsparameter mittels der mit rotierenden Lüftereinrichtung (8, 9) und einer zusätzlichen Lüftereinrichtung (11) derart erfolgt, dass das Ausmaß der Kühlung mit anwachsender Differenz zwischen dem jeweilig erfassten Zustandsparameter und dem Grenzwert anwächst und mit abfallender Differenz zwischen dem jeweilig erfassten Zustandsparameter und dem Grenzwert abfällt.

5. Verfahren gemäß Anspruch 4,
wobei als Zustandsparameter eine Temperatur von wenigstens einem Teil der rotierenden elektrischen Maschine (5) erfasst wird, und
wobei als Grenzwert ein Temperaturgrenzwert verwendet wird.
